# EUROPEAN PATENT SPECIFICATION

(11) **EP 0 812 756 B1**
(45) Date of publication and mention of the grant of the patent: **05.02.2003**
(21) Application number: 97201784.2
(22) Date of filing: 13.06.1997
(51) Int. Cl.: B62D 21/20, A01D 67/00

(54) **An assembly and also a trailer suitable for such an assembly**
Anhänger-Aufbau
Ensemble de remorque

(30) Priority: 14.06.1996 NL 1003341
(43) Date of publication of application: 17.12.1997
(73) Proprietor: Kamps de Wild B.V., 6902 PK Zevenaar (NL)
(72) Inventor: Bruil, Frederik Anton, 7071 TX Ulft (NL); Bles, Martinus Theodorus Maria, 6941 BK Didam (NL)
(74) Representative: Veldman-Dijkers, Cornelia G.C., Ir.

(56) References cited:
- CH-A- 395 620
- DE-U- 1 954 743
- FR-A- 705 147
- GB-A- 584 416
- GB-A- 927 843
- GB-A- 1 350 064
- US-A- 4 147 017
- US-A- 4 662 162

## Description

The invention relates to an assembly comprising a trailer which is provided with a frame and at least two parallel wheels which are rotatably connected to said frame, which wheels are rotatable about a substantially horizontal axis of rotation, whereby said frame comprises a first portion, which is positioned between the two wheels, and a second portion connected to said first portion, which is positioned before or behind said wheels, seen in a direction of movement transversely to the axis of rotation, whereby said second portion has a dimension in a direction parallel to the axis of rotation which is larger than the distance between said wheels, and whereby said second portion is provided with a rectangular opening.

With a similar trailer intended for container transport, which is known from German Gebrauchsmuster No. 1954743, the trailer is coupled to a tractor, whereby the frame extends over the tractor.

Since the first portion of the frame is positioned between the wheels, the distance from the frame to the ground does not depend on the size of the wheels, and it may be selected to enable a relatively advantageous transmission of power from a vehicle to the trailer. A loading platform may for example be mounted on the second portion, which is wider than the first portion, which loading platform is supported on the frame in a stable manner by said wider second portion. In order to be able to couple the trailer to the tractor at an angle to the road surface, the frame of the trailer is provided with a rectangular opening, through which the tractor may extend.

The trailer is only suitable for use as a container carrier and it is not intended nor suitable for other uses.

The object of the invention is to provide an assembly for picking up crop over a relatively large width whilst retaining the advantages of a frame which is partially positioned between the wheels.

With the trailer according to the invention this objective is accomplished in that the assembly is furthermore provided with a crop pick-up unit and a loading platform, which is detachably coupled to said second portion, whereby said crop pick-up unit is mounted under said passage opening and wherein said loading platform is mounted above said passage opening.

The relatively large width of the second portion makes it possible to use a relatively large passage. Furthermore it is possible to couple a relatively wide crop pick-up unit and a relatively wide loading platform to the frame in a stable manner. The dimension of the passage of said second portion is preferably such that crop can be picked up over a width which is larger than the distance between the wheels, so that the wheels will at no time travel across crop which is yet to be picked up.

It is noted that with another trailer which is known per se the wheels are positioned under the frame, and they are suspended from said frame by means of a chassis. A coupling connects the frame to a vehicle by means of which the trailer is moved. With the known trailer the distance from the frame to a ground surface across which the trailer is moved depends on the size of the wheels.

If the trailer is used for transporting goods across a relatively soft ground surface, the wheels need to be relatively large. As a result of this the frame will be positioned at a relatively large distance from the ground, which makes it more difficult to couple it to the vehicle and which leads to a disadvantageous transmission of power from the vehicle to the trailer.

One embodiment of the trailer according to the invention is characterized in that said wheels are rotatably journalled in a chassis which is coupled to the frame, which chassis is movable in the direction of travel with respect to the first portion of said frame.

The movable chassis makes it possible to adjust the distance from the wheels to the point where the trailer is coupled to the vehicle, as a result of which the mechanical load on the coupling becomes adjustable.

The distribution of the weight over the frame is changed when the crop pick-up unit is attached to the second portion. It is still possible to ensure that the load exerted on the coupling remains the same by moving the chassis with respect to the frame.

Another embodiment of the trailer according to the invention is characterized in that the frame is movable with respect to said first portion by means of at least one hydraulic cylinder.

The chassis can also be moved by means of said hydraulic cylinder while the trailer is moving. Thus it is possible to move the chassis in a direction away from the coupling when it is temporarily desirable to increase the load on the coupling, for example when moving across a heap of mown crop, whilst the chassis can subsequently be moved back to its starting position again.

The invention will be explained in more detail with reference to the drawings, in which:
Figure 1 is a perspective view of a trailer according to the invention;
Figure 2 is a perspective view of a frame of the trailer shown in Figure 1;
Figure 3 shows a chassis of the trailer shown in Figure 1;
Figure 4 is a plan view of the chassis shown in Figure 3.

Like parts are numbered alike in the Figures.

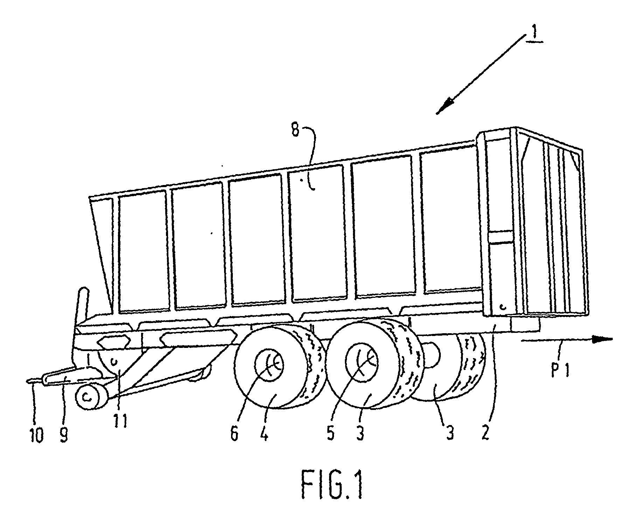

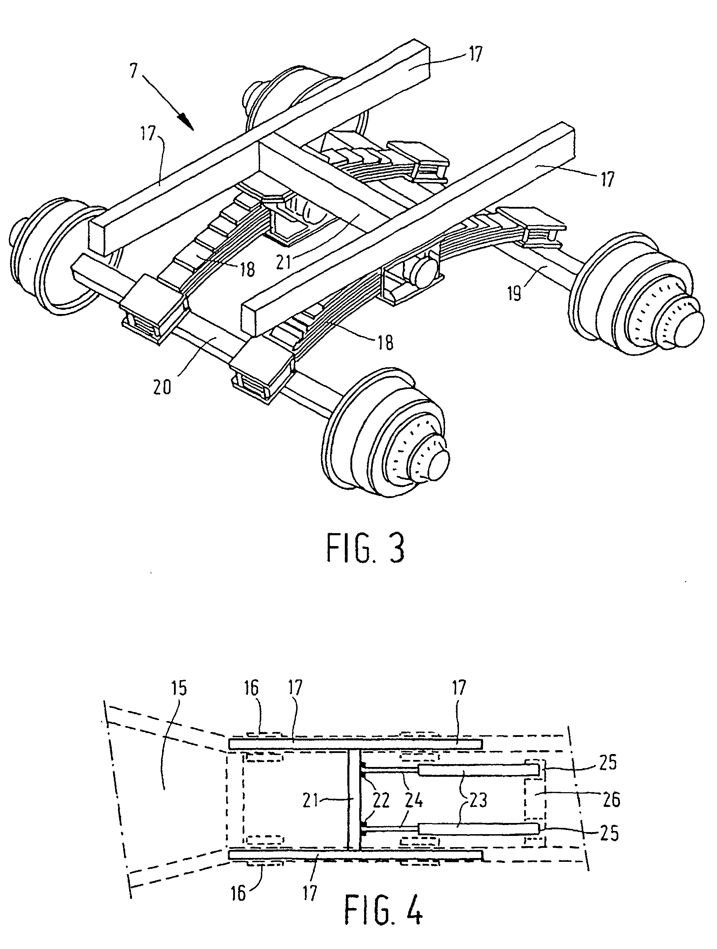

Figure 1 shows a trailer 1 comprising a frame 2, which can be moved across a ground surface by means of two pairs of wheels 3, 4. Each pair of wheels 3, 4 is rotatably journalled about substantially horizontal axes of rotation 5, 6. Said axes of rotation are connected to frame 2 by means of a chassis 7 (see Figure 3). A loading platform 8 is mounted on frame 2. Frame 2 is provided with a pole 9 at a front side, which pole is provided at an end remote from the frame with a coupling 10, by means of which trailer 1 can be coupled to a vehicle (not shown), which is capable of moving trailer 1. A crop pick-up unit 11 is attached to the front side of frame 2, by means of which mown crop can be picked up from a ground surface and be carried into loading platform 8 via an opening in the bottom side of said loading platform. A crop pick-up unit 11 of this kind is known per se, and will not be explained in more detail herein, therefore.

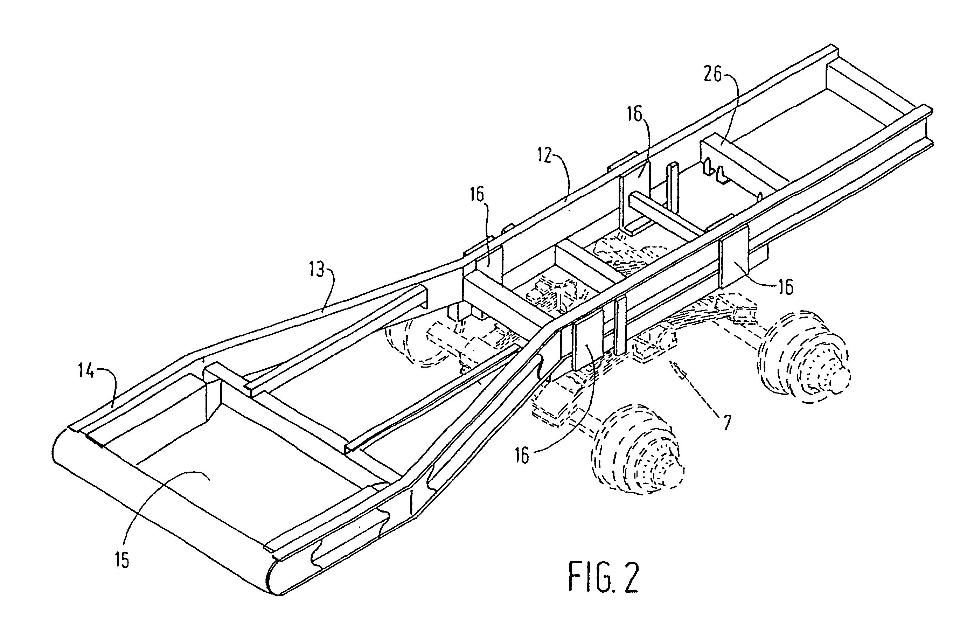

Figure 2 is a perspective view of frame 2 according to the invention. Frame 2 comprises a first, relatively narrow portion 12, which is connected to a second portion 14 via a tapering portion 13. Second portion 14 has the same width as loading platform 8 and is provided with an opening 15, through which crop picked up by means of crop pick-up device 11 can be moved into loading platform 8. First portion 12 is positioned between opposed wheels 3, 4. First portion 12 is provided with two pairs of guides 16 positioned on either side of first portion 12, in which chassis 7 can be movably mounted.

Figure 3 shows the H-shaped chassis 7, which comprises four legs 17, which can each be movably fitted in a guide 16. Chassis 7 is provided with a spring pack 18, to which two axles 19, 20 are attached. Axles 19, 20 extend parallel to axes of rotation 5, 6. Wheels 3, 4 are rotatably attached to said axles 19, 20. Legs 17 of the H-shaped chassis 7 are interconnected by a bridge 21 extending parallel to axles 19, 20. Attached to said bridge 21 are the ends 22 of pistons 24, which are movable within cylinders 23. Cylinders 23 are pivotally connected with their ends 25 remote from pistons 24 to a cross-beam 26 of first portion 12 (see Figure 2).

The operation of trailer 1 is as follows.

Trailer 1 is coupled to a vehicle, for example a tractor (not shown), by means of coupling 10. Then the trailer is moved across a pasture with mown crop, whereby mown crop is lifted by means of pick-up device 11 and moved into loading platform 8 via opening 15 in frame 2. When loading platform 8 is full, said loading platform 8 is emptied at an appropriate location. Trailer 1 may also be used as a transport wagon or silage wagon. In order to prevent transporting unnecessary weight when the trailer is being used as a silage wagon, pick-up unit 11 is detached from frame 2. This will change the weight distribution of trailer 1, as a result of which the mechanical load exerted by coupling 10 on a drawbar (not shown) of the tractor will decrease. In order to increase the load on the drawbar, chassis 7 and wheels 3, 4 attached thereto will be moved in a direction indicated by arrow P1. This will increase the load on the drawbar again. In a similar manner an increase drawbar load can be obtained during movement. A change in the load on the drawbar will also cause a change in the tractive effort which can be transmitted from the vehicle to the trailer. In practice it has become apparent that the chassis will be moved rearwards when moving across a hill or a heap of mown crow at relatively low speed, as a result of which the load on the drawbar is temporarily increased and the tractor can transmit a greater tractive effort.

It is also possible to attach the second portion detachably to the first portion, so that a narrow pole (or a narrow and light second portion) can be fixed to the first portion. This will lead to an even greater weight saving when the trailer is being used as a silage wagon.

## Claims

1. An assembly comprising a trailer (1) which is provided with a frame (2) and at least two parallel wheels (3, 4) which are rotatably connected to said frame, which wheels are rotatable about a substantially horizontal axis of rotation (5, 6), whereby said frame comprises a first portion (12), which is positioned between the two wheels, and a second portion (14) connected to said first portion, which is positioned before or behind said wheels, seen in a direction of movement transversely to the axis of rotation, whereby said second portion has a dimension in a direction parallel to the axis of rotation which is larger than the distance between said wheels, and whereby said second portion is provided with a rectangular opening (15), **characterized in that** the assembly is furthermore provided with a crop pick-up unit (11) and a loading platform (8), which is detachably coupled to said second portion, whereby said crop pick-up unit is mounted under said passage opening and wherein said loading platform is mounted above said passage opening.

2. An assembly according to claim 1, **characterized in that** said wheels are rotatably journalled in a chassis (7) which is coupled to the frame, which chassis is movable in the direction of travel with respect to the first portion of said frame.

3. An assembly according to any one of the preceding claims, **characterized in that** said chassis is movable with respect to said first portion by means of at least one hydraulic cylinder (23).

4. An assembly according to any one of the preceding claims, **characterized in that** the second part of said frame can be coupled to a vehicle which drives said trailer.

5. An assembly according to any one of the preceding claims, **characterized in that** said portion is detachably connected to said first portion.

6. An assembly according to any one of the preceding claims, **characterized in that** said wheels are capable of pivoting movement about substantially vertical axes.

## Patentansprüche

1. Aufbau umfassend einen Anhänger (1), welcher mit einem Rahmen (2) und wenigstens zwei parallelen Rädern (3, 4) versehen ist, die drehbar mit dem Rahmen verbunden sind, welche Räder um eine im wesentlichen horizontale Drehachse (5, 6) drehbar sind, wobei der Rahmen einen ersten Abschnitt (12), welcher zwischen den zwei Rädern angeordnet ist, und einen zweiten Abschnitt (14) aufweist, welcher mit dem ersten Abschnitt verbunden ist und welcher vor oder hinter den Rädern, in einer Bewegungsrichtung quer zur Drehachse gesehen, angeordnet ist, wobei der zweite Abschnitt eine Abmessung in einer Richtung parallel zur Drehachse hat, welche größer als der Abstand zwischen den Rädern ist, und wobei der zweite Abschnitt mit einer rechteckigen Öffnung (15) versehen ist, **dadurch gekennzeichnet, daß** der Aufbau ferner mit einer Ernte-Aufnehrnereinheit (11) und einer Ladepritsche (8) versehen ist, welche lösbar mit dem zweiten Abschnitt gekoppelt ist, wobei die Ernte-Aufnehmereinheit unter der Durchgangsöffnung angebracht ist und wobei die Ladepritsche oberhalb der Durchgangsöffnung angebracht ist.

2. Aufbau nach Anspruch 1, **dadurch gekennzeichnet, daß** die Räder drehbar in einem Chassis (7) gelagert sind, das mit dem Rahmen gekoppelt ist, welches Chassis in Fahrtrichtung in Bezug auf den ersten Abschnitt des Rahmens bewegbar ist.

3. Aufbau nach einem der vorhergehenden Ansprüche, **dadurch gekennzeichnet, daß** das Chassis mittels wenigstens eines hydraulischen Zylinders (23) in Bezug auf den ersten Abschnitt bewegbar ist.

4. Aufbau nach einem der vorhergehenden Ansprüche, **dadurch gekennzeichnet, daß** der zweite Teil des Rahmens mit einem Fahrzeug gekoppelt werden kann, welches den Anhänger antreibt.

5. Aufbau nach einem der vorhergehenden Ansprüche, **dadurch gekennzeichnet, daß** der Abschnitt lösbar mit dem ersten Abschnitt verbunden ist.

6. Aufbau nach einem der vorhergehenden Ansprüche, **dadurch gekennzeichnet, daß** die Räder in der Lage sind, eine Schwenkbewegung um im wesentlichen vertikale Achsen auszuführen.

## Revendications

1. Ensemble comprenant une remorque (1) pourvue d'un cadre (2) et d'au moins deux roues parallèles (3, 4) qui sont reliées de manière rotative audit cadre, lesquelles roues sont capables de tourner autour d'un axe de rotation (5, 6) sensiblement horizontal, de telle manière que ledit cadre comprenne une première partie (12), qui est positionnée entre les deux roues, et une deuxième partie (14) reliée à ladite première partie, qui est positionnée avant ou derrière lesdites roues, vue dans une direction de mouvement transversale à l'axe de rotation, de telle manière que ladite deuxième partie présente une dimension dans une direction parallèle à l'axe de rotation qui est supérieure à la distance entre lesdites roues, et de telle manière que ladite deuxième partie soit pourvue d'une ouverture rectangulaire (15), **caractérisé en ce que** l'ensemble est, en outre, pourvu d'une unité de ramassage de récolte (11) et d'une plate-forme de chargement (8), qui est couplée de manière détachable à ladite deuxième partie, de telle manière que ladite unité de ramassage de récolte soit montée sous ladite ouverture de passage et dans lequel ladite plate-forme de chargement est montée au-dessus de ladite ouverture de passage.

2. Ensemble selon la revendication 1, **caractérisé en ce que** lesdites roues sont montées de manière rotative dans un palier dans un châssis (7) qui est couplé au cadre, lequel châssis est mobile dans la direction de déplacement par rapport à La première partie dudit cadre.

3. Ensemble selon l'une quelconque des revendications précédentes, **caractérisé en ce que** ledit châssis est mobile par rapport à ladite première partie au moyen d'au moins un vérin hydraulique (23).

4. Ensemble selon l'une quelconque des revendications précédentes, **caractérisé en ce que** la deuxième partie dudit cadre peut être couplée à un véhicule qui entraîne ladite remorque.

5. Ensemble selon l'une quelconque des revendications précédentes, **caractérisé en ce que** ladite partie est reliée de manière détachable à ladite première partie.

6. Ensemble selon l'une quelconque des revendications précédentes, **caractérisé en ce que** lesdites roues sont capables d'effectuer un mouvement pivotant autour d'axes sensiblement verticaux.
